(19) Europäisches Patentamt
European Patent Office
Office européen des brevets

(11) **EP 2 878 526 A1**

(12) **EUROPEAN PATENT APPLICATION**

(43) Date of publication:
**03.06.2015 Bulletin 2015/23**

(51) Int Cl.:
**B62M 6/45** *(2010.01)* **B62M 6/50** *(2010.01)*

(21) Application number: **14275208.8**

(22) Date of filing: **02.10.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **13.11.2013 KR 20130137479**

(71) Applicant: **Samsung Electro-Mechanics Co., Ltd.
Gyeonggi-do (KR)**

(72) Inventors:
• **Kim, Se Joo
Gyeonggi-Do (KR)**

• **Hong, Bok Young
Gyeonggi-Do (KR)**
• **Ha, Keun Soo
Gyeonggi-Do (KR)**
• **Son, Joung Ho
Gyeonggi-Do (KR)**
• **Lee, Geun Ho
Gyeonggi-Do (KR)**

(74) Representative: **Potter Clarkson LLP
The Belgrave Centre
Talbot Street
Nottingham, NG1 5GG (GB)**

(54) **System and method of controlling travel of electric bicycle**

(57) There are provided a system and a method of controlling travel of an electric bicycle using a scheme of sensing a rotational speed of a drive shaft to which a pedal is connected and operating a driving motor so as to follow the rotational speed. The system of controlling travel of an electric bicycle includes: a pedal rotational speed detecting unit detecting a pedal speed, which is a rotational speed of a drive shaft to which a pedal of the electric bicycle is connected; and a controlling unit calculating an assist speed by adding an additional speed to the detected pedal speed and commanding a driving unit to drive a motor connected to the drive shaft depending on the calculated assist speed, wherein the controlling unit compares the pedal speed and the assist speed with each other after the motor has started to be driven and adjusts the assist speed so that the pedal speed and the assist speed are matched with each other.

EP 2 878 526 A1

**Description**

**BACKGROUND**

The exemplary embodiment in the present disclosure relates to a system and a method of controlling travel of an electric bicycle, and more particularly, to a system and a method of controlling travel of an electric bicycle using a scheme of sensing a rotational speed of a drive shaft to which a pedal is connected and operating a driving motor so as to match the rotational speed.

Generally, a bicycle, which travels using the pedaling effort of a user, does not have difficulty in travel on relatively flat terrain, but requires a large degree of force when ridden up a sloping path (ramp).

In order to solve the above-mentioned problem, an electric bicycle using the driving force of a motor as auxiliary power, in addition to the effort of pedaling of the user has recently been developed.

An electric bicycle, a bicycle in which wheels are driven using electrical power stored in a battery, has recently been commonly used for recreation, as well as by people that may not be able to ride a bicycle using their own force, such as the elderly and frail or the handicapped.

Therefore, in a process in which the user pedals the bicycle to rotate a drive shaft, thereby allowing the bicycle to travel, it has become important to allow the motor mounted on the electric bicycle to delicately assist in the pedaling of the user, using various modes.

In order to satisfy this user demand, a power assist system (PAS: Pedelec) in which a motor generates auxiliary power corresponding to pedaling effort has been developed and used. In this power assist system, a magnitude of the pedaling effort is detected so that the motor may be driven at a predetermined power assist ratio with respect to the pedaling effort.

In this case, a travel mode of the electric bicycle includes a power assist mode of detecting a magnitude of the pedaling effort, depending on a pedal input when the user pedals the electric bicycle, thereby allowing driving force of the motor to assist in the pedaling effort at a determined power assist ratio (power assist ratio for pedaling effort).

An electric bicycle according to the related art may include a rear wheel corresponding to a driving wheel, similar to a general bicycle, a pedal, a sprocket wheel, a motor installed on the rear wheel, a torque detecting unit detecting pedal input torque, a chain connected between the sprocket wheel and the real wheel corresponding to the driving wheel, an input unit including a manual operation button, and the like, and a display unit displaying a travel mode (power assist and regeneration braking modes), an energy use amount (discharging amount), a regeneration amount (charging amount), and the like.

However, since the electric bicycle according to the related art should detect torque input to pedals using such a torque detecting unit (torque sensor) which may be relatively expensive, a final product is inevitably expensive, such that such bicycles have not become widespread.

[Related Art Document]

(Patent Document 1) Japanese Patent Laid-Open Publication No. 2008-030750

**SUMMARY**

An exemplary embodiment in the present disclosure may provide an electric bicycle exhibiting the same travel performance (as a bicycle disclosed in the related art) in a simple scheme without using an expensive torque sensor.

An exemplary embodiment in the present disclosure may also provide a system and a method of controlling travel of an electric bicycle capable of allowing travel performance satisfactory to a user to be exhibited without using an expensive torque sensor by setting various levels of travel performance to be exhibited in each mode.

An exemplary embodiment in the present disclosure, a method of controlling travel of an electric bicycle may include: detecting a pedal speed, which is a rotational speed of a drive shaft to which a pedal of the electric bicycle is connected; calculating an assist speed by adding an additional speed to the detected pedal speed; and driving a motor connected to the drive shaft depending on the calculated assist speed, wherein after the motor has started to be driven, when the pedal speed and the assist speed are compared with each other, the assist speed is adjusted so that the pedal speed and the assist speed are matched with each other.

The assist speed may be calculated by the following Mathematical Equation:

$$(\text{Mathematical Equation}) \quad As = Ps + (Ps * a)/x$$

where Ps is a pedal speed, As is an assist speed, x is a gear ratio, a is a gear ratio adjusting coefficient, and (Ps*a)/x is an additional speed.

The method of controlling travel of an electric bicycle may further include, before the calculating of the assist speed, setting and receiving modes depending on a travel state of the electric bicycle, wherein the additional speeds are different from each other in each received mode.

The method of controlling travel of an electric bicycle may further include, before the calculating of the assist speed, setting and receiving modes depending on a travel state of the electric bicycle, wherein the additional speed is calculated by changing a value of 'a' in the above Mathematical Equation in each received mode.

Maximum values of currents supplied to the motor in each received mode may be different from each other.

The additional speeds may be different from each other, depending on whether or not the pedal speed exceeds a threshold value.

The method of controlling travel of an electric bicycle may further include: calculating a ground inclination angle using an acceleration sensor depending on a gradient of the electric bicycle; and making the additional speeds different from each other, depending on whether or not the ground inclination angle exceeds a threshold value.

The method of controlling travel of an electric bicycle may further include: calculating a ground inclination angle using an acceleration sensor depending on a gradient of the electric bicycle; and changing a value of 'a' in the above Mathematical Equation depending on whether or not the ground inclination angle exceeds a threshold value.

The method of controlling travel of an electric bicycle may further include, after the detecting of the pedal speed, determining whether or not the pedal speed exceeds a threshold value, wherein the driving of the motor is stopped in the case in which the pedal speed is equal to the threshold value or less.

An exemplary embodiment in the present disclosure, a system of controlling travel of an electric bicycle may include: a pedal rotational speed detecting unit detecting a pedal speed, which is a rotational speed of a drive shaft to which a pedal of the electric bicycle is connected; and a controlling unit calculating an assist speed by adding an additional speed to the detected pedal speed and commanding a driving unit to drive a motor connected to the drive shaft depending on the calculated assist speed, wherein the controlling unit compares the pedal speed and the assist speed with each other after the motor has started to be driven and adjusts the assist speed so that the pedal speed and the assist speed are matched with each other.

The system of controlling travel of an electric bicycle may further include a user input unit setting and receiving modes depending on a travel state of the electric bicycle, wherein the controlling unit controls the additional speeds to be different from each other in each received mode.

The system of controlling travel of an electric bicycle may further include a user input unit setting and receiving modes depending on a travel state of the electric bicycle, wherein the controlling unit controls maximum values of currents supplied to the motor in each received mode to be different from each other.

The controlling unit may control the additional speeds to be different from each other, depending on whether or not the pedal speed exceeds a threshold value.

The system of controlling travel of an electric bicycle may further include: an inclination angle detecting unit calculating a ground inclination angle using an acceleration sensor depending on a gradient of the electric bicycle, wherein the controlling unit controls the additional speeds to be different from each other, depending on whether or not the ground inclination angle exceeds a threshold value.

The system of controlling travel of an electric bicycle may further include an initial driving determining unit determining whether or not the motor is initially driven by determining whether or not the pedal speed exceeds a threshold value, wherein the controlling unit controls the driving unit to stop the driving of the motor in the case in which the pedal speed is equal to the threshold value or less.

**BRIEF DESCRIPTION OF DRAWINGS**

The above and other aspects, features and other advantages of the present disclosure will be more clearly understood from the following detailed description taken in conjunction with the accompanying drawings, in which:

FIG. 1 is a block diagram illustrating a system of controlling travel of an electric bicycle according to an exemplary embodiment in the present disclosure;

FIGS. 2 through 4 are flow charts illustrating a method of controlling travel of an electric bicycle according to an exemplary embodiment in the present disclosure;

FIG. 5 is a reference view illustrating a principle of following a pedal speed in the system of controlling travel of an electric bicycle according to an exemplary embodiment in the present disclosure;

FIG. 6 is a reference view illustrating a method of applying a gear ratio adjusting coefficient (a) in each set mode in the system of controlling travel of an electric bicycle according to an exemplary embodiment in the present disclosure;

FIG. 7 is a view illustrating examples of values of the gear ratio adjusting coefficient (a) applied in FIG. 6; and

FIG. 8 is a reference view illustrating an example of setting limit values of currents input in each set mode in the system of controlling travel of an electric bicycle according to an exemplary embodiment in the present disclosure.

## DETAILED DESCRIPTION

Hereinafter, embodiments of the present disclosure will be described in detail with reference to the accompanying drawings.

The disclosure may, however, be embodied in many different forms and should not be construed as being limited to the embodiments set forth herein. Rather, these embodiments are provided so that this disclosure will be thorough and complete, and will fully convey the scope of the disclosure to those skilled in the art.

Throughout the drawings, the same or like reference numerals will be used to designate the same or like elements.

A terminal (an electronic device) described in the present specification may include a computer (including all a desktop computer, a laptop computer, a computer transformed in consideration of a system, and the like), a cellular phone, a smart phone, a personal digital assistant (PDA), a portable multimedia player (PMP), and the like. In addition, the terminal (electronic device) may include all electronic devices connected to a system of controlling travel of an electric bicycle described in an exemplary embodiment of the present disclosure and including a controlling unit.

Further, it may be easily appreciated by those skilled in the art that a configuration according to an exemplary embodiment of the present disclosure described in the present specification may be applied to a static terminal such as a desktop computer, or the like, as well as a portable terminal such as a portable electronic device.

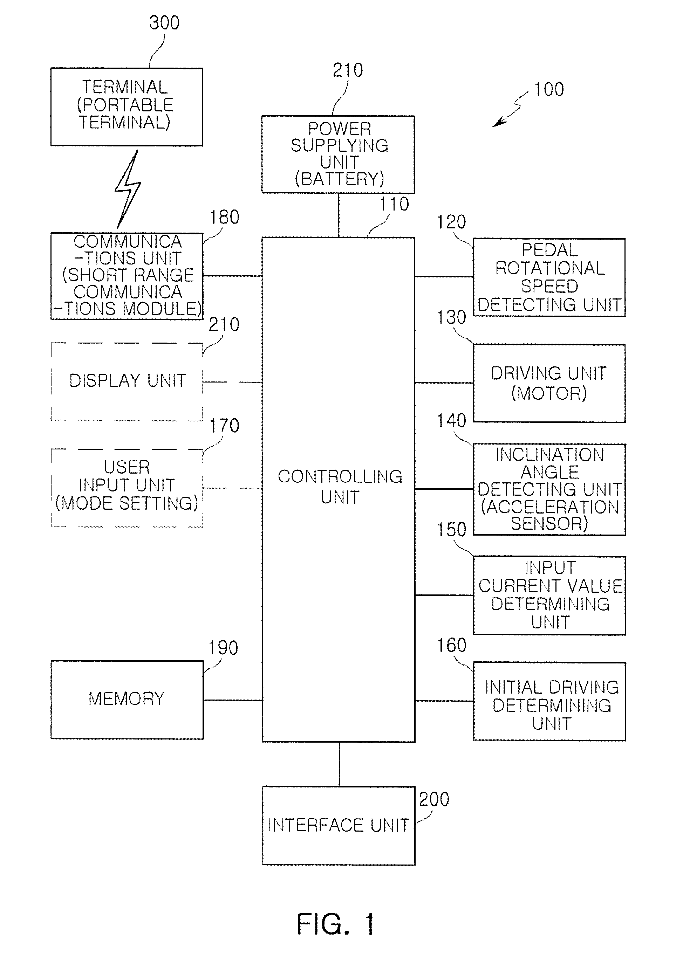

FIG. 1 is a block diagram illustrating a system of controlling travel of an electric bicycle according to an exemplary embodiment in the present disclosure.

Referring to FIG. 1, a system 100 of controlling travel of an electric bicycle according to an exemplary embodiment in the present disclosure may necessarily include a controlling unit 110, a pedal rotational speed detecting unit 120, and a driving unit 130. In addition, the system 100 of controlling travel of an electric bicycle according to an exemplary embodiment in the present disclosure may include an inclination angle detecting unit 140, an input current value determining unit 150, an initial driving determining unit 160, a communications unit 180, a memory 190, an interface unit 200, and the like. In addition, the communications unit 180 may be connected to a terminal 300 via wired or wireless communications. In addition, the system 100 of controlling travel of an electric bicycle according to the present exemplary embodiment may include a power supplying unit 210 supplying power to the system 100 of controlling travel of an electric bicycle.

Meanwhile, the system 100 of controlling travel of an electric bicycle according to the present exemplary embodiment may include a user input unit 170 therein in addition to the communications unit 180 to enable an operation thereof. Further, the system 100 of controlling travel of an electric bicycle according to the present exemplary embodiment may include a display unit 210 displaying system information such as manipulated content, a remaining amount of battery charge, and the like. In the case in which the system 100 of controlling travel of an electric bicycle according to the present exemplary embodiment includes the user input unit 170 or the display unit 210, it may not include the communications unit 180.

In addition, the components illustrated in FIG. 1 may not be essential components. Therefore, the system of controlling travel of an electric bicycle may also be implemented so as to have components more or less than the components illustrated in FIG. 1.

Further, all components of the system 100 of controlling travel of an electric bicycle according to the present exemplary embodiment except for the pedal rotational speed detecting unit 120, the driving unit 130, and the power supplying unit 210 may be connected to the pedal rotational speed detecting unit 120, the driving unit 130, and the power supplying unit 210 in a wired and wireless scheme and be provided in one terminal.

The controlling unit 110 may generally control a general operation of the system 100 of controlling travel of an electric bicycle. In addition, the controlling unit 110 may work in concert with the terminal (electronic device) 300 connected thereto through the communications unit 180.

For example, the controlling unit 110 performs associated controlling and processing for setting and application of modes input by a user, a change in a current input value depending on an inclination angle, calculation of an assist speed in each mode, and the like. In detail, the controlling unit 110 may perform controlling and processing associated with an operation command that may be executed in controlling travel of an electric bicycle to be described below.

In addition, the controlling unit 110 may create the operation command corresponding to an input by the user. The controlling unit 110 may also include a multimedia module (not shown) for reproducing multimedia. The multimedia module may be implemented in the controlling unit 110 or be implemented separately from the controlling unit 110. Further, in the case in which contents stored in a memory are changed, the controlling unit 110 may apply all of these contents to each component.

The pedal rotational speed detecting unit 120 may be provided in the controlling unit 110 or be provided separately from the controlling unit 110. Even though the pedal rotational speed detecting unit 120 is provided separately from the controlling unit 110, it may work in concert with the controlling unit 110.

The pedal rotational speed detecting unit 120 may detect a pedal speed, which is a rotational speed of a drive shaft to which a pedal of the electric bicycle is connected. Therefore, the pedal rotational speed detecting unit 120 may be a rotary encode provided along an outer side surface of the drive shaft. Further, an optical sensor, a magnetic sensor, a micro-switch or the like, that may only detect a rotation position of '0' degrees may be used as the pedal rotational speed detecting unit 120. Furthermore, any unit that may detect a rotational speed of the pedal may be used as the pedal rotational speed detecting unit 120 even though it is not separately mentioned.

In addition, the pedal rotational speed detecting unit 120 may transfer the detected rotational speed of the pedal to the controlling unit 110 to allow the controlling unit 110 to perform associated processing.

The driving unit 130 may rotate the pedal depending on a command of the controlling unit 110. Therefore, the driving unit 130 may be a driving motor connected to the drive shaft of the pedal. The driving motor may be connected to a rotation axis of the pedal to rotate the pedal at a predetermined rotational speed depending on a command of the controlling unit 110. In this case, when the user increases or decreases the rotational speed of the pedal, the motor may not hinder the rotation of the pedal by the user even though a rotational speed by the motor is not the same as the rotational speed of the pedal by the user.

Meanwhile, the controlling unit 110 may calculate a rotational speed of the driving motor provided in the driving unit 130 using the pedal speed detected by the pedal rotational speed detecting unit 120. That is, the controlling unit 110 may calculate an assist speed by adding an additional speed to the detected pedal speed.

In more detail, the assist speed may be calculated by the following Mathematical Equation 1.

$$\text{(Mathematical Equation 1)} \quad As = Ps + (Ps*a)/x$$

Here, Ps is a pedal speed, As is an assist speed, x is a gear ratio, a is a gear ratio adjusting coefficient, and (Ps*a)/x is an additional speed.

That is, the pedal speed (Ps) may be a value detected by the pedal rotational speed detecting unit 120, and the assist speed (As) may be determined by the gear ratio (x) set by the user and the gear ratio adjusting coefficient (a) set by the controlling unit 110 after the controlling unit 100 recognizes a travel situation of the electric bicycle in each mode.

Meanwhile, in a deriving process of the above Mathematical Equation 1, a concept of a reference motor speed (MSref) may be introduced.

That is, the reference motor speed (MSref), which is a value obtained by additionally calculating the pedal speed (Ps) in consideration of the gear ratio (x) and the gear ratio adjusting coefficient (a), may be represented by the following Mathematical Equation 2.

$$\text{(Mathematical Equation 2)} \quad MSref = Ps*(x+a)$$

In addition, the assist speed (As) may be represented by the following Mathematical Equation 3 using the above Mathematical Equation 2.

$$\text{(Mathematical Equation 3)} \quad As = MSref/x$$

Here, in some cases, other numerical values may be used as the gear ratio. In an exemplary embodiment of the present disclosure, '33' was used as a gear ratio.

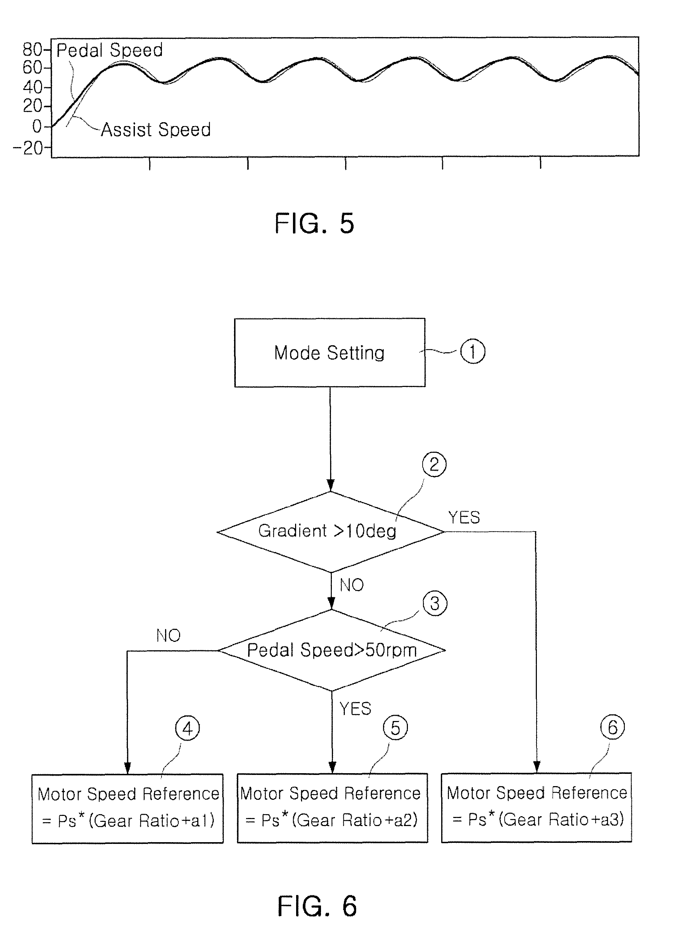

FIG. 5 is a conceptual diagram illustrating a principle of matching a pedal speed through a virtual simulation. As illustrated in FIG. 5, in the system (method) of controlling travel of an electric bicycle according to the present exemplary embodiment, a basic principle of a speed controller controlling the assist speed (As) to follow the pedal speed (Ps) that is precisely detected may be used.

When this principle is applied to the above Mathematical Equations 1 to 3, for example, in the case in which a value of the gear ratio adjusting coefficient (a) is set to '0' and a control is performed in consideration of the reference motor speed (MSref), the pedal speed (Ps) may become equal to the assist speed (As), such that a speed by the driving motor is controlled to be the same as the rotational speed of the pedal. Therefore, the user of the electric bicycle may not feel him receiving assist from the motor.

Meanwhile, in the case in which the value of the gear ratio adjusting coefficient (a) is set to '0.5' and a control is performed in the case that the pedal speed (Ps) is 50rpm, the reference motor speed (MSref) may be 1675rpm, and in the case in which the value of the gear ratio adjusting coefficient (a) is set to '0', the reference motor speed (MSref) may be 1650rpm. In this case, the motor may be rotated at a higher speed by 25rpm when the value of the gear ratio adjusting coefficient (a) is set to '0.5' than when the value of the gear ratio adjusting coefficient (a) is set to '0'.

As a result, it may be appreciated from the above Mathematical Equation 3 that the user receives the assist from the motor at a speed higher by 0.76rpm in the case in which the value of the gear ratio adjusting coefficient (a) is set to '0.5' than in the case in which the value of the gear ratio adjusting coefficient (a) is set to '0'.

As described above, in a state in which a speed of the motor is set to be controlled by setting the reference motor speed (MSref) so that the pedal speed (Ps) is slightly higher than the assist speed (As), 1) in the case in which a human power torque of the user is increased, that is, in the case in which the rotational speed of the pedal is increased, Ps may be larger than As, such that a "Ps-As" speed controller error value is increased. Therefore, the speed controller may increase the assist speed so that "Ps=As". In addition, 2) in the case in which a human power torque of the user is decreased, that is, in the case in which the rotational speed of the pedal is decreased, Ps may be smaller than As, such that the "Ps-Pa" speed controller error value is decreased. Therefore, the speed controller may decrease the assist speed so that "Ps=As".

When a value of the reference motor speed (MSref) is set to be slightly higher than "Ps*gear ratio (x) and is controlled so that the assist speed (As) follows the pedal speed (Ps) depending on an increase or decrease in the pedal speed (Ps) according to an increase or decrease in the human power torque, as described above, excellent ride comfort may be implemented.

In addition, the system 100 of controlling travel of an electric bicycle according to the present exemplary embodiment may divide modes depending on an assist degree of the driving motor. That is, the system 100 of controlling travel of an electric bicycle according to the present exemplary embodiment may divide the modes into an weak assist mode (mode 1), an middle assist mode (mode 2), an strong assist mode (mode 3), and the like, depending on an assist degree required by the user and allow the assist degree to be determined depending on a set mode. As a result, the value of the gear ratio adjusting coefficient (a) may be changed depending on the set mode. The larger the value of the gear ratio adjusting coefficient (a), the larger the assist of the driving motor.

In addition, the system 100 of controlling travel of an electric bicycle according to the present exemplary embodiment may control the value of the gear ratio adjusting coefficient (a) to be changed depending on the rotational speed of the pedal and gradient information of the electric bicycle, thereby receiving the assist from the driving motor in accordance with each situation in each mode. Next, this content will be described in detail together with a description for the inclination angle detecting unit 140 and the input current value determining unit 150 associated with this content.

The inclination angle detecting unit 140 may be provided in the controlling unit 110 or may be provided separately from the controlling unit 110. Even though the inclination angle detecting unit 140 is provided separately from the controlling unit 110, it may work in concert with the controlling unit 110.

The inclination angle detecting unit 140 may detect an inclination (inclination angle) of the ground on which the electric bicycle is positioned. That is, the inclination angle detecting unit 140 may determine whether the electric bicycle is travelling up or down an inclined surface, based on a movement direction of the electric bicycle.

Therefore, the inclination angle detecting unit 140 may include an acceleration sensor. The inclination angle detecting unit 140 is not limited to including an acceleration sensor, but may include any unit that may detect an inclination of the ground.

In addition, the inclination angle detecting unit 140 may transfer the detected inclination angle to the controlling unit 110 to allow the controlling unit 110 to perform associated processing.

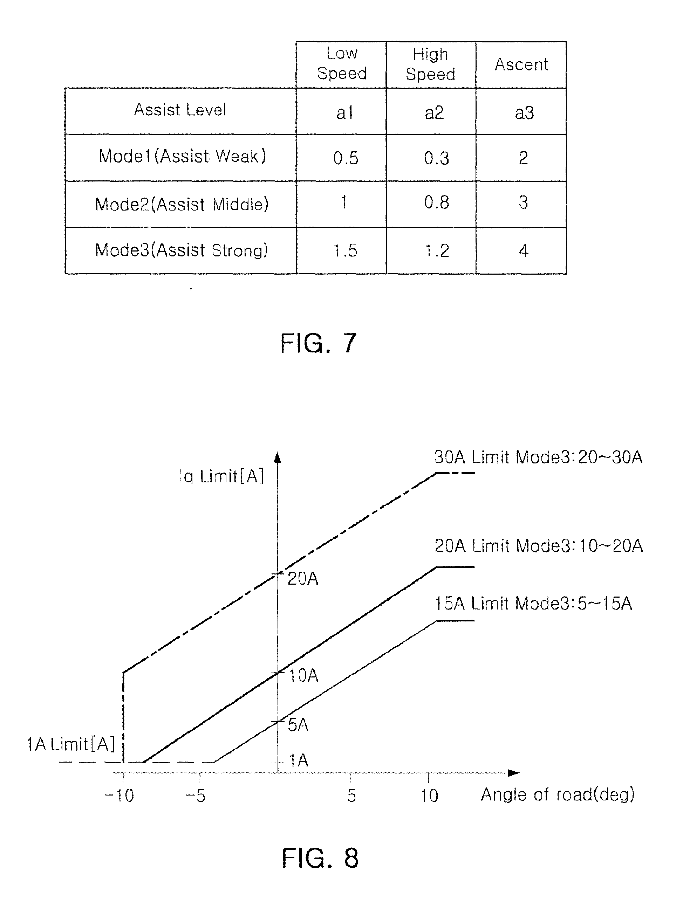

Referring to FIG. 6, a flow chart of an example in which the gear ratio adjusting coefficient (a) is changed in each application mode of the driving motor is illustrated. In addition, FIG. 7 shows examples of values applied to the gear ratio adjusting coefficient (a) of FIG. 6.

As illustrated in FIGS. 6 and 7, 1) when the user sets a mode (for example, any one of Modes 1 to 3 of FIG. 7) through the user input unit 170 or the terminal 300 in consideration of an assist level (①), 2) the inclination angle detecting unit 140 may detect the ground inclination angle using the acceleration sensor and transfer the inclination angle to the controlling unit 110 and the controlling unit 110 may determine whether or not the ground inclination angle exceeds a predetermined threshold value (for example, 10deg) (②), 3) set the gear ratio adjusting coefficient (a) to a value (a3) of an ascent mode (⑥) in the case in which the ground inclination angle exceeds the predetermined threshold value, 4) additionally determine whether or not the rotational speed of the pedal exceeds a predetermined threshold value (for example, 50rpm) (③) in the case in which the ground inclination angle does not exceed the predetermined threshold value, 5) set the gear ratio adjusting coefficient (a) to a value (a2) of a high speed travel mode (⑤) in the case in which the rotational speed of the pedal exceeds the predetermined threshold value, and 6) set the gear ratio adjusting coefficient (a) to a value (a1) of a low speed travel mode (④) in the case in which the rotational speed of the pedal does not exceed the predetermined threshold value.

The input current value determining unit 150 may be provided in the controlling unit 110 or be provided separately from the controlling unit 110. Even though the input current value determining unit 150 is provided separately from the controlling unit 110, it may work in concert with the controlling unit 110.

The input current value determining unit 150 may set limits of an input current to be different from each other, depending on the mode set by the user.

That is, as illustrated in FIG. 8, in the modes that may be set by the user, for example, the weak assist mode (mode 1), the middle assist mode (mode 2), the strong assist mode (mode 3), and the like, limit values of the input current values used to operate the driving motor may be set to be different from each other.

When a control is performed only in a scheme of matching a pedal speed, amounts of assists in each mode set by the user may be distinguished from each other by the values of the gear ratio adjusting coefficient (a). However, in the case in which an error value between the pedal speed (Ps) and the assist speed (As) is increased, a maximum current for matching pedal speed may be applied to the driving motor, such that it is meaningless to distinguish the amounts of assists in each mode from each other. Therefore, limit values of currents that may be applied to the driving motor in each mode may be set to be different from each other, thereby sub-dividing an assist degree may be felt by the user in each mode.

Meanwhile, in a rapid inclination section, the limit value of the current needs to be increased in order for the electric bicycle to travel up the inclined surface. Therefore, after a gradient is measured using the acceleration sensor, the limit values of the currents in each mode may be increased in the case in which the gradient exceeds a predetermined limit value.

The initial driving determining unit 160 may be provided in the controlling unit 110 or be provided separately from the controlling unit 110. Even though the initial driving determining unit 160 is provided separately from the controlling unit 110, it may work in concert with the controlling unit 110.

The initial driving determining unit 160 may block an operation of the driving motor in the case in which the rotational speed of the pedal is equal to or less than a predetermined threshold value, for example, 10rpm. This may be to block a risk situation such sudden unintended acceleration, or the like, that may occur when the driving motor is operated even in the case in which the electric bicycle is in an initial driving step.

The user input unit 170 may be used for the user to generate input data for controlling an operation of the terminal. The user input unit 170 may be configured of a keypad, a dome switch, a touch pad (resistive/capacitive), a jog wheel, a jog switch, or the like.

The system 100 of controlling travel of an electric bicycle according to the present exemplary embodiment may directly include the user input unit 170 or may include the communications unit 180 to thereby be connected to the separate terminal 300 by a wired and wireless communications method, and may be controlled by the terminal 300.

In addition, the system 100 of controlling travel of an electric bicycle according to the present exemplary embodiment may include the display unit 210 displaying general states such as a state of the system, and the like. Here, the display unit 210 may be directly included in the system 100. Alternatively, a display unit of the separate terminal 300 connected to the communications unit 180 by the wired and wireless communications method may be used as the display unit 210.

The communications unit 180 may include one or more module enabling communications between the terminal 300 and the system 100 of controlling travel of an electric bicycle or between networks in which the terminal 300 and the system 100 of controlling travel of an electric bicycle are positioned. The communications unit 180 may perform communications in a wired or wireless scheme. For example, the communications unit 180 may include the Internet module, a short range communications module, and the like.

The Internet module, which indicates a module for wired or wireless Internet access, may be disposed inside or outside the terminal 300 and the system 100 of controlling travel of an electric bicycle. As the Internet technology, local area network (LAN) technology, wireless LAN (WLAN) (Wi-Fi) technology, wireless broadband (Wibro) technology, world interoperability for microwave access (Wimax) technology, high speed downlink packet access (HSDPA) technology, or the like, may be used.

The short range communications module may indicate a module for short range communications. As a short range communications technology, Bluetooth technology, radio frequency identification (RFID) technology, infrared data association (IrDA) technology, ultra wideband (UWB) technology, ZigBee technology, or the like, may be used.

The memory 190 may store a program for an operation of the controlling unit 110 therein and temporally or permanently store input/output and calculated data (results) (for example, a still image, a moving picture, a disparity, a phonebook, a message, or the like) therein. The memory 190 may store image content input or selected from the user therein. The memory 190 may include at least one of a flash memory type storage medium, a hard disk type storage medium, a multimedia card micro type storage medium, a card type memory (for example, an SD or XD memory, or the like), a random access memory (RAM), a static random access memory (SRAM), a read-only memory (ROM), an electrically erasable programmable read-only memory (EEPROM), a programmable read-only memory (PROM), a magnetic memory, a magnetic disk, and an optical disk. The terminal 300 may also be operated in connection with a web storage performing a storing function of the memory 190 on the Internet.

The interface unit 200 may serve as a path to all external devices connected to the system 100 of controlling travel of an electric bicycle. The interface unit 200 may receive data or power transmitted or supplied from the external device to transfer the data or the power to each component in the system 100 of controlling travel of an electric bicycle or allow data in the system 100 of controlling travel of an electric bicycle to be transmitted to the external device. The interface unit 200 may include, for example, a wired/wireless headset port, an external charging port, a wired/wireless data port, a memory card port, a port for the connection of a device including an identity module, an audio input/output (I/O) port, a video I/O port, an earphone port, and the like.

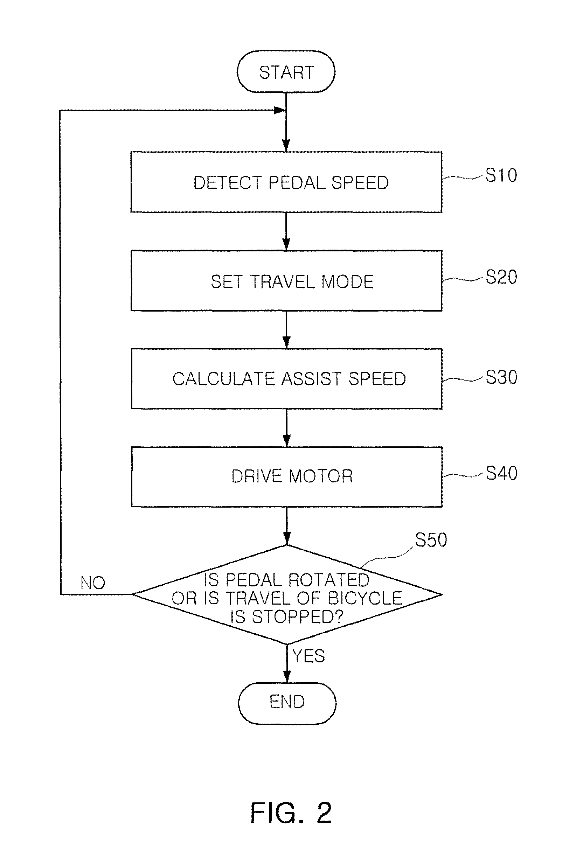

FIGS. 2 through 4 are flow charts illustrating a method of controlling travel of an electric bicycle according to an exemplary embodiment of the present disclosure. Hereinafter, a sequence of processes through which the method of controlling travel of an electric bicycle according to an exemplary embodiment of the present disclosure is performed will be described, and a description for detailed contents of each process will be replaced by the description for the system 100 of controlling travel of an electric bicycle according to an exemplary embodiment of the present disclosure described above with reference to FIG. 1.

Referring to FIG. 2, the method of controlling travel of an electric bicycle according to an exemplary embodiment of the present disclosure may include detecting the pedal speed, which is the rotational speed of the drive shaft on which the pedal of the electric bicycle is connected (S10), calculating the assist speed by adding the additional speed to the detected pedal speed (S30), and driving the motor connected to the drive shaft depending on the calculated assist speed (S40). In addition, after the motor has started to be driven, when the pedal speed and the assist speed are compared with each other, the assist speed may be adjusted so that the pedal speed and the assist speed are matched with each other.

Here, the assist speed may be calculated by the above Mathematical Equations 1 to 3.

In addition, the method of controlling travel of an electric bicycle according to an exemplary embodiment of the present disclosure may further include, before the calculating of the assist speed, setting and receiving the modes depending on a travel state of the electric bicycle (S20), wherein the additional speeds may be different from each other in each received mode. In more detail, the additional speed may be calculated by changing the value of 'a' in above Mathematical Equations 1 to 3 in each received mode.

In addition, maximum values of the currents supplied to the motor in each received mode may be different from each other, thereby further sub-dividing assist strength of the driving motor.

Further, the additional speeds may be different from each other, depending on whether or not the pedal speed exceeds the threshold value, thereby further sub-dividing the assist strength of the driving motor.

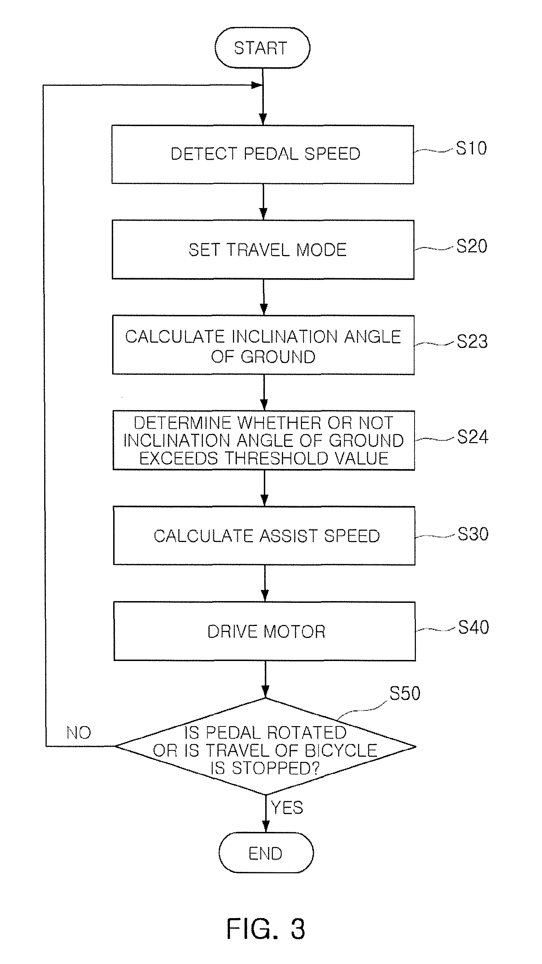

Next, referring to FIG. 3, the method of controlling travel of an electric bicycle according to an exemplary embodiment of the present disclosure may further include calculating the ground inclination angle using the acceleration sensor depending on a gradient of the electric bicycle (S23) and making the additional speeds different from each other, depending on whether or not the ground inclination angle exceeds the threshold value (S24). In detail, the values of 'a' in the above Mathematical Equations 1 to 3 may be different from each other, depending on whether or not the ground inclination angle exceeds the threshold value.

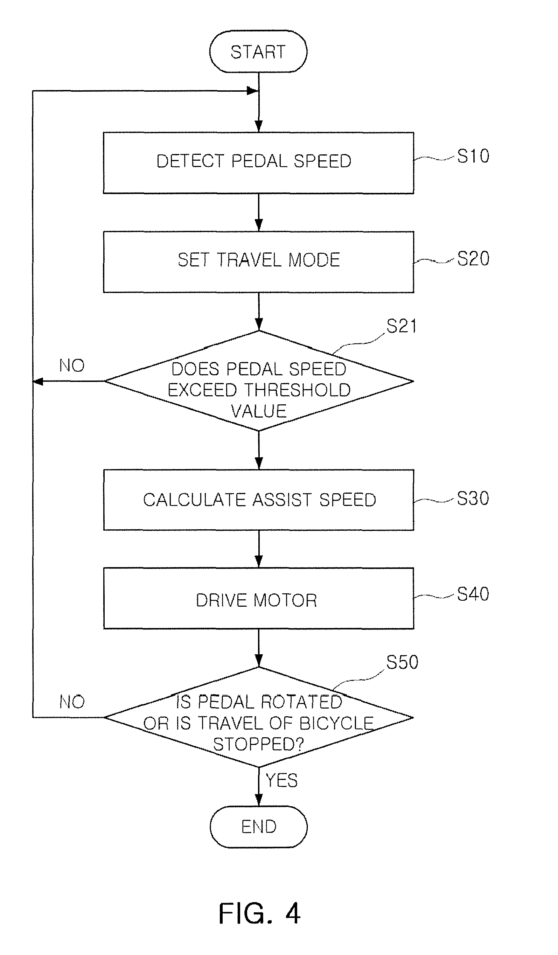

Next, referring to FIG. 4, the method of controlling travel of an electric bicycle according to an exemplary embodiment of the present disclosure may further include, after the detecting of the pedal speed, determining whether or not the pedal speed exceeds the threshold value (S21), wherein the driving of the motor is stopped in the case in which the pedal speed is equal to the threshold value or less. It may be again determined whether or not the pedal speed exceeds the threshold value through a circulation loop, thereby operating the driving motor.

As set forth above, according to exemplary embodiments of the present disclosure, an electric bicycle capable of exhibiting the same travel performance in a simple scheme without using an expensive torque sensor may be provided.

Traveling performance satisfactory to a user may be exhibited without using an expensive torque sensor by setting various levels of travel performance to be exhibited in each mode.

While exemplary embodiments have been shown and described above, it will be apparent to those skilled in the art that modifications and variations could be made without departing from the scope of the present invention as defined by the appended claims.

## Claims

**1.** A method of controlling travel of an electric bicycle, comprising:

detecting a pedal speed, which is a rotational speed of a drive shaft to which a pedal of the electric bicycle is connected;
calculating an assist speed by adding an additional speed to the detected pedal speed; and

driving a motor connected to the drive shaft depending on the calculated assist speed,
wherein after the motor has started to be driven, when the pedal speed and the assist speed are compared with each other, the assist speed is adjusted so that the pedal speed and the assist speed are matched with each other.

2.  The method of controlling travel of an electric bicycle of claim 1, wherein the assist speed is calculated by the following Mathematical Equation:

$$\text{(Mathematical Equation)} \quad As = Ps + (Ps*a)/x$$

where Ps is a pedal speed, As is an assist speed, x is a gear ratio, a is a gear ratio adjusting coefficient, and $(Ps*a)/x$ is an additional speed.

3.  The method of controlling travel of an electric bicycle of claim 1, further comprising, before the calculating of the assist speed, setting and receiving modes depending on a travel state of the electric bicycle,
wherein the additional speeds are different from each other in each received mode.

4.  The method of controlling travel of an electric bicycle of claim 2, further comprising, before the calculating of the assist speed, setting and receiving modes depending on a travel state of the electric bicycle,
wherein the additional speed is calculated by changing a value of 'a' in the above Mathematical Equation in each received mode.

5.  The method of controlling travel of an electric bicycle of claim 3 or 4, wherein maximum values of currents supplied to the motor in each received mode are different from each other.

6.  The method of controlling travel of an electric bicycle of claim 1 or 2, wherein the additional speeds are different from each other, depending on whether or not the pedal speed exceeds a threshold value.

7.  The method of controlling travel of an electric bicycle of claim 1, further comprising:

    calculating a ground inclination angle using an acceleration sensor depending on a gradient of the electric bicycle; and
    making the additional speeds different from each other, depending on whether or not the ground inclination angle exceeds a threshold value.

8.  The method of controlling travel of an electric bicycle of claim 2, further comprising:

    calculating a ground inclination angle using an acceleration sensor depending on a gradient of the electric bicycle; and
    changing a value of 'a' in the above Mathematical Equation depending on whether or not the ground inclination angle exceeds a threshold value.

9.  The method of controlling travel of an electric bicycle of claim 1 or 2, further comprising, after the detecting of the pedal speed, determining whether or not the pedal speed exceeds a threshold value,
wherein the driving of the motor is stopped in the case in which the pedal speed is equal to the threshold value or less.

10. A system of controlling travel of an electric bicycle, comprising:

    a pedal rotational speed detecting unit detecting a pedal speed, which is a rotational speed of a drive shaft to which a pedal of the electric bicycle is connected; and
    a controlling unit calculating an assist speed by adding an additional speed to the detected pedal speed and commanding a driving unit to drive a motor connected to the drive shaft depending on the calculated assist speed,
    wherein the controlling unit compares the pedal speed and the assist speed with each other after the motor has started to be driven and adjusts the assist speed so that the pedal speed and the assist speed are matched with each other.

**11.** The system of controlling travel of an electric bicycle of claim 10, further comprising a user input unit setting and receiving modes depending on a travel state of the electric bicycle,
wherein the controlling unit controls the additional speeds to be different from each other in each received mode.

**12.** The system of controlling travel of an electric bicycle of claim 10, further comprising a user input unit setting and receiving modes depending on a travel state of the electric bicycle,
wherein the controlling unit controls maximum values of currents supplied to the motor in each received mode to be different from each other.

**13.** The system of controlling travel of an electric bicycle of claim 10, wherein the controlling unit controls the additional speeds to be different from each other, depending on whether or not the pedal speed exceeds a threshold value.

**14.** The system of controlling travel of an electric bicycle of claim 10, further comprising an inclination angle detecting unit calculating a ground inclination angle using an acceleration sensor depending on a gradient of the electric bicycle,
wherein the controlling unit controls the additional speeds to be different from each other, depending on whether or not the ground inclination angle exceeds a threshold value.

**15.** The system of controlling travel of an electric bicycle of claim 10, further comprising an initial driving determining unit determining whether or not the motor is initially driven by determining whether or not the pedal speed exceeds a threshold value,
wherein the controlling unit controls the driving unit to stop the driving of the motor in the case in which the pedal speed is equal to the threshold value or less.

FIG. 1

START

DETECT PEDAL SPEED — S10

SET TRAVEL MODE — S20

CALCULATE ASSIST SPEED — S30

DRIVE MOTOR — S40

S50

NO ← IS PEDAL ROTATED OR IS TRAVEL OF BICYCLE IS STOPPED?

YES

END

FIG. 2

START

DETECT PEDAL SPEED — S10

SET TRAVEL MODE — S20

CALCULATE INCLINATION ANGLE OF GROUND — S23

DETERMINE WHETHER OR NOT INCLINATION ANGLE OF GROUND EXCEEDS THRESHOLD VALUE — S24

CALCULATE ASSIST SPEED — S30

DRIVE MOTOR — S40

S50

IS PEDAL ROTATED OR IS TRAVEL OF BICYCLE IS STOPPED?

NO

YES

END

FIG. 3

FIG. 4

```
 80
 60   Pedal Speed
 40
 20
  0
-20        Assist Speed
```

## FIG. 5

```
        ┌──────────────────┐
        │   Mode Setting    │────────①
        └──────────────────┘
                 │
                 ▼
                                    ②
            ◇─────────────◇       YES
             Gradient >10deg ─────────────┐
            ◇─────────────◇               │
                 │ NO                       │
                 ▼           ③              │
    NO      ◇─────────────◇                │
   ┌────────  Pedal Speed>50rpm            │
   │        ◇─────────────◇                │
   │             │ YES                      │
   │          ④         │  ⑤           │  ⑥
   ▼                    ▼                   ▼
┌───────────────┐ ┌───────────────┐ ┌───────────────┐
│Motor Speed    │ │Motor Speed    │ │Motor Speed    │
│Reference      │ │Reference      │ │Reference      │
│= Ps*(Gear     │ │= Ps*(Gear     │ │= Ps*(Gear     │
│  Ratio+a1)    │ │  Ratio+a2)    │ │  Ratio+a3)    │
└───────────────┘ └───────────────┘ └───────────────┘
```

## FIG. 6

| | Low Speed | High Speed | Ascent |
|---|---|---|---|
| Assist Level | a1 | a2 | a3 |
| Mode1(Assist Weak) | 0.5 | 0.3 | 2 |
| Mode2(Assist Middle) | 1 | 0.8 | 3 |
| Mode3(Assist Strong) | 1.5 | 1.2 | 4 |

## FIG. 7

## FIG. 8

Europäisches
Patentamt

European
Patent Office

Office européen
des brevets

# EUROPEAN SEARCH REPORT

Application Number

EP 14 27 5208

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 201 777 370 U (WENRUI GUO) 30 March 2011 (2011-03-30) | 1-6,9, 10,13,15 | INV. B62M6/45 B62M6/50 |
| Y | * abstract; figures 1,2 * | 7,8,11, 12,14 | |
| Y | US 2013/138281 A1 (CHIEN SHIH-HSIANG [TW] ET AL) 30 May 2013 (2013-05-30) | 7,8,14 | |
| A | * paragraph [0039] * | 1 | |
| Y | CN 103 057 656 A (PETER JOHANNSEN) 24 April 2013 (2013-04-24) | 11,12 | |
| A | * abstract * | 1 | |

TECHNICAL FIELDS
SEARCHED        (IPC)

B62M

The present search report has been drawn up for all claims

| Place of search | Date of completion of the search | Examiner |
|---|---|---|
| The Hague | 29 April 2015 | Huber, Florian |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 .........................................................................................

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**                    EP 14 27 5208

This annex lists the patent family members relating to the patent documents cited in the above-mentioned European search report.
The members are as contained in the European Patent Office EDP file on
The European Patent Office is in no way liable for these particulars which are merely given for the purpose of information.

29-04-2015

| Patent document cited in search report | | Publication date | Patent family member(s) | | Publication date |
|---|---|---|---|---|---|
| CN 201777370 | U | 30-03-2011 | NONE | | |
| US 2013138281 | A1 | 30-05-2013 | CN | 103129690 A | 05-06-2013 |
| | | | TW | 201321259 A | 01-06-2013 |
| | | | US | 2013138281 A1 | 30-05-2013 |
| CN 103057656 | A | 24-04-2013 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2008030750 A